(19) Europäisches Patentamt
European Patent Office
Office européen des brevets

(11) EP 4 435 052 A1

(12) EUROPEAN PATENT APPLICATION
published in accordance with Art. 153(4) EPC

(43) Date of publication:
**25.09.2024 Bulletin 2024/39**

(21) Application number: **22895380.8**

(22) Date of filing: **26.10.2022**

(51) International Patent Classification (IPC):
***C08L 71/10** (2006.01)* ***C08G 65/40** (2006.01)*
***C08K 3/013** (2018.01)*

(52) Cooperative Patent Classification (CPC):
**C08G 65/40; C08K 3/013; C08L 71/10**

(86) International application number:
**PCT/JP2022/039928**

(87) International publication number:
**WO 2023/090096 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2021 JP 2021187922**

(71) Applicants:
- **Honshu Chemical Industry Co., Ltd.**
  **Tokyo 103-0027 (JP)**
- **Daikin Industries, Ltd.**
  **Osaka-shi, Osaka 530-0001 (JP)**

(72) Inventors:
- **HASHIKAWA, Akihiro**
  **Wakayama-shi, Wakayama 641-0007 (JP)**
- **SHIMODA, Tomoaki**
  **Wakayama-shi, Wakayama 641-0007 (JP)**
- **NAKANO, Yasuhiro**
  **Osaka-shi, Osaka 530-8323 (JP)**
- **MATSUMOTO, Haruna**
  **Osaka-shi, Osaka 530-8323 (JP)**
- **KAJIWARA, Kohei**
  **Osaka-shi, Osaka 530-8323 (JP)**

(74) Representative: **Grünecker Patent- und Rechtsanwälte**
**PartG mbB**
**Leopoldstraße 4**
**80802 München (DE)**

# (54) POLYETHER NITRILE MOLDING MATERIAL, METHOD FOR MANUFACTURING SAME, AND METHOD FOR MANUACTURING POLYETHER NITRILE RESIN COMPOSITION MOLDING MATERIAL

(57) An object is to provide a polyether nitrile molding material having high flowability during melt molding. As a solution, a polyether nitrile molding material having a melt flow rate (MFR) in the range of 2 to 50 g/10 min as measured at 390°C under a load of 5000 g in accordance with ISO 1133 is provided.

EP 4 435 052 A1

## Description

Technical Field

The present invention relates to a polyether nitrile molding material having high flowability and a method for producing the polyether nitrile molding material.

Background Art

Aromatic ether copolymers are not only excellent in heat resistance, flame resistance, chemical resistance, and mechanical strength but also are thermoplastic and can be melt-molded by heating, and thus are useful resins that can provide various molded articles such as filaments, films, sheets, tubes, pipes, and round bars through molding methods such as injection molding, extrusion molding, and heat compression molding.

(Co)polymers are generally heated, melted, and kneaded with resin materials added and then formed into molding materials (resin compositions) such as pellets and chips, which are processed into various molded articles, but aromatic ether copolymers are useful as base resins for molding materials (resin compositions).

Polyether nitrile (e.g., PTLs 1 and 2), which is one of the aromatic ether copolymers, is a resin having the highest level of heat resistance and high mechanical strength among thermoplastic resins. This is obtained in the form of a polymer powder by cleaning and drying a polyether nitrile obtained by a polycondensation reaction, and this powder is used in the form of a molding material such as pellets or chips for ease of processing.

Polyether nitrile is a resin that has a very high melting point and needs to be molded at a high temperature close to 400°C.

Citation List

Patent Literature

PTL 1: Japanese Unexamined Patent Application Publication No. 60-147439
PTL 2: Japanese Unexamined Patent Application Publication No. 61-055120

Summary of Invention

Technical Problem

The present inventors have found a problem that when a polyether nitrile powder is subjected to melt kneading or heat compression molding to be formed into a molding material such as pellets or chips, melt flowability greatly decreases.

An object of the present invention is to provide a polyether nitrile molding material having high flowability during melt molding.

Solution to Problem

To achieve the above object, the present inventors have conducted intensive studies and found that a polyether nitrile molding material having high flowability during melt molding can be obtained by melt-molding a polyether nitrile under exclusion of oxygen or in an inert atmosphere, thereby completing the present invention.

The present invention is as follows.

1. A polyether nitrile molding material having a melt flow rate (MFR) in a range of 2 to 50 g/10 min as measured at 390°C under a load of 5000 g in accordance with ISO 1133.
2. The polyether nitrile molding material according to 1., including a polyether nitrile having a repeating unit represented by general formula (1) below.

[Chem. 1]

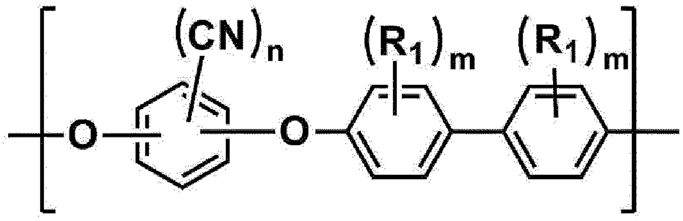 (1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

3. The polyether nitrile molding material according to 1., having a reduced viscosity $\eta_{red}$ of 1 or more and 5 or less.
4. The polyether nitrile molding material according to 1., having a glass transition temperature (Tg) of 180°C or higher and 300°C or lower.
5. A method for producing the polyether nitrile molding material according to 1., including melt-molding a polyether nitrile under exclusion of oxygen or in an inert atmosphere.
6. The method for producing the polyether nitrile molding material according to 5., wherein the polyether nitrile has a reduced viscosity $\eta_{red}$ of 1 or more and 5 or less.
7. The method for producing the polyether nitrile molding material according to 5., wherein the polyether nitrile has a glass transition temperature (Tg) of 180°C or higher and 300°C or lower.
8. A method for producing a polyether nitrile resin composition molding material, including melt-molding, under exclusion of oxygen or in an inert atmosphere, a polyether nitrile resin composition containing a polyether nitrile and at least one selected from the group consisting of (A) to (C): a thermoplastic resin material (A), an additive (B), and a filler (C).

Advantageous Effects of Invention

The polyether nitrile molding material according to the present invention exhibits high flowability when melted by heating, and thus can provide a stable heat-molded article excellent in high heat resistance, surface smoothness, dimensional stability, etc. and having improved usage quality, which is very useful.

By melt-molding a polyether nitrile under exclusion of oxygen or in an inert atmosphere in accordance with the production method according to the present invention, a polyether nitrile molding material having high melt flowability can be obtained.

By melt-molding a polyether nitrile resin composition under exclusion of oxygen or in an inert atmosphere in accordance with the production method according to another aspect of the present invention, a polyether nitrile resin composition molding material having high melt flowability can be obtained.

Description of Embodiments

A polyether nitrile molding material according to the present invention is formed of a polyether nitrile obtained by allowing an aromatic dihydroxy compound (I) and a dihalobenzonitrile compound (II), which will be described below, to undergo a desalting polycondensation reaction in the presence of a basic compound.

A polyether nitrile resin composition molding material according to a production method of the present invention includes a polyether nitrile obtained by the above desalting polycondensation reaction.

<Aromatic dihydroxy compound (I)>

The aromatic dihydroxy compound (I) in the present invention includes all aromatic compounds having two hydroxy groups. Among them, a compound represented by general formula (2) below is preferred.

[Chem. 2]

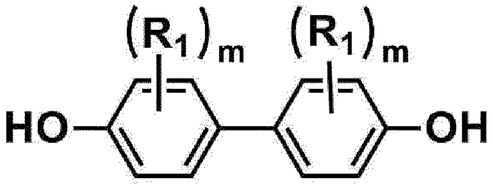

(2)

(In the formula, $R_1$ and m are as defined in general formula (1).)

Each $R_1$ in general formula (2) above independently represents a linear or branched alkyl group having 1 to 6 carbon atoms, a cyclic alkyl group having 5 or 6 carbon atoms, or a phenyl group. In particular, $R_1$ is preferably a linear or branched alkyl group having 1 to 4 carbon atoms, a cyclic alkyl group having 5 or 6 carbon atoms, or a phenyl group, more preferably a linear or branched alkyl group having 1 to 4 carbon atoms or a phenyl group, particularly preferably an alkyl group having one carbon atom, that is, a methyl group.

Each m in formula (2) above independently represents an integer of 0 to 4. In particular, m is preferably 0, 1, or 2, more preferably 0 or 1, particularly preferably 0. When m is 1 or 2, a structural configuration in which $R_1$ is bonded to the ortho position with respect to the oxygen atom is preferred.

Specific examples of the compound represented by general formula (2) include 4,4'-biphenol, 3,3'-biphenol, 4,4'-dihydroxy-3,3'-dimethylbiphenyl, 4,4'-dihydroxy-3,3',5,5'-tetramethylbiphenyl, and 4,4'-dihydroxy-2,2',3,3',5,5'-hexamethylbiphenyl. Of these, 4,4'-biphenol, 4,4'-dihydroxy-3,3'-dimethylbiphenyl, 4,4'-dihydroxy-3,3',5,5'-tetramethylbiphenyl, and 4,4'-dihydroxy-2,2',3,3',5,5'-hexamethylbiphenyl are preferred, 4,4'-biphenol, 4,4'-dihydroxy-3,3'-dimethylbiphenyl, and 4,4'-dihydroxy-3,3',5,5'-tetramethylbiphenyl are more preferred, and 4,4'-biphenol is particularly preferred. At least one of these compounds is used. These may be used alone or may be used in combination of two or more.

<Dihalobenzonitrile compound (II)>

The dihalobenzonitrile compound (II) in the present invention includes all benzonitrile compounds having two halogen groups. Among them, a compound represented by general formula (3) below is preferred.

[Chem. 3]

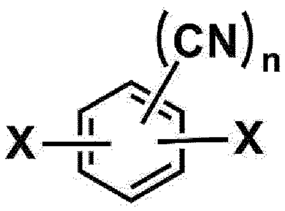

(3)

(In the formula, each X independently represents a halogen atom, and n is as defined in general formula (1).)

Each X in general formula (3) independently represents a halogen atom, preferably independently represents a chlorine atom, a bromine atom, or an iodine atom, more preferably independently represents a chlorine atom or a bromine atom, particularly preferably represents a chlorine atom.

In general formula (3), n represents an integer of 1 to 4. In particular, n is preferably 1, 2, or 3, more preferably 1 or 2, particularly preferably 1. When n is 1, a structural configuration in which halogen atoms are bonded to both the ortho positions with respect to the cyano group is preferred.

Specific examples of the dihalobenzonitrile compound (II) in the present invention include 2,6-difluorobenzonitrile, 2,5-difluorobenzonitrile, 2,4-difluorobenzonitrile, 2,6-dichlorobenzonitrile, 2,5-dichlorobenzonitrile, 2,4-dichlorobenzonitrile, 2,6-dibromobenzonitrile, 2,5-dibromobenzonitrile, 2,4-dibromobenzonitrile, and 1,4-dichloro-2,5-dicyanobenzene. The dihalobenzonitrile compound (II) may also be a reactive derivative thereof. Of these, 2,6-difluorobenzonitrile and 2,6-dichlorobenzonitrile are suitable for use from the viewpoint of, for example, reactivity and economic efficiency. The compound represented by general formula (3) above may be a combination of two or more of these compounds.

Examples of the reactive derivative include, in the case of structures derived from 2,6-dihalobenzonitrile, compounds that can react with aromatic dihydroxy compounds as represented by the following general formulae, and these mean compounds derived from the reactions between two 2,6-dihalobenzonitriles and between 2,6-dihalobenzonitrile and an aromatic dihydroxy compound.

[Chem. 4]

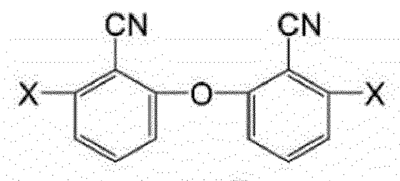

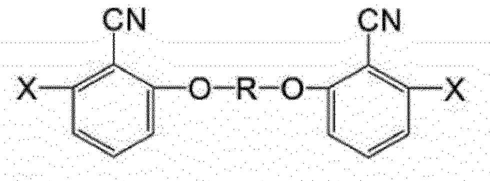

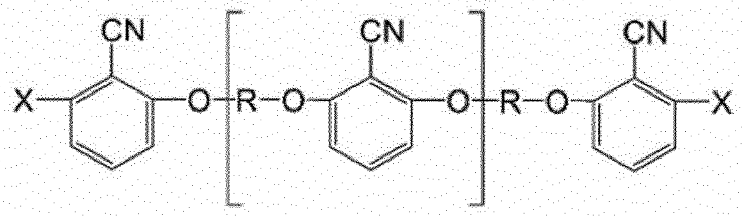

(In the formulae, R is as defined in general formula (2), and X is as defined in general formula (3).)

<Amount of raw material used>

In the above desalting polycondensation reaction, the aromatic dihydroxy compound (I) is used at a molar ratio in the range of 0.8 to 1.2 relative to the dihalobenzonitrile compound (II). In particular, the aromatic dihydroxy compound (I) is preferably used in the range of 0.9 to 1.1, more preferably used in the range 0.95 to 1.05, particularly preferably used in the range of 0.99 to 1.01. To maximize the polymerization rate in the polycondensation reaction, the aromatic dihydroxy compound (I) and the dihalobenzonitrile compound (II) are preferably used at a molar ratio of substantially 1.00.

The aromatic dihydroxy compound (I) and the dihalobenzonitrile compound (II) used may each be a combination of two or more compounds. When two or more compounds are used for each, they are used such that the molar ratio between the total amount of the compounds as the aromatic dihydroxy compound (I) and the total amount of the compounds as the dihalobenzonitrile compound (II) is as described above.

<Basic compound>

The basic compound in the above desalting polycondensation reaction may be any compound, whether an organic base or an inorganic base, as long as it promotes the desalting polycondensation reaction and does not affect the quality, but is preferably an inorganic base, especially preferably an alkali metal compound or an alkaline-earth metal compound, particularly preferably an alkali metal compound.

Organic bases include tetramethylammonium hydroxide, triethylamine, N,N-diisopropylethylamine, 1,1,3,3-tetramethylguanidine (TMG), N,N-dimethyl-4-aminopyridine (DMAP), 2,6-lutidine, pyridine, 1,8-diazabicyclo[5.4.0]-7-undecene (DBU), 1,5-diazabicyclo[4.3.0]-5-nonene (DBN), 7-methyl-1,5,7-triazabicyclo[4.4.0]dec-5-ene (MTBD), 1,5,7-triazabicyclo[4.4.0]dec-5-ene (TBD), 1,8-bis(dimethylaminonaphthalene) (DMAN), 1,4-diazabicyclo[2.2.2]octane (DABCO), tert-butylimino-tri(pyrrolidino)phosphorane, tert-butylimino-tris(dimethylamino)phosphorane, 2-tert-butylimino-2-diethylamino-1,3-dimethylperhydro-1,3,2-diazaphosphorine, tert-octylimino-tris(dimethylamino)phosphorane, phosphazene base P2-Et, phosphazene base P2-t-Bu, phosphazene base P3-t-Bu, phosphazene base P4-t-Bu, and phosphazene base P4-t-Oct.

Among inorganic bases, examples of alkali metal compounds include alkali metals such as lithium, rubidium, cesium, potassium, and sodium; alkali metal hydrides such as lithium hydride, rubidium hydride, cesium hydride, potassium hydride, and sodium hydride; alkali metal hydroxides such as lithium hydroxide, rubidium hydroxide, cesium hydroxide, potassium hydroxide, and sodium hydroxide; alkali metal carbonates such as lithium carbonate, rubidium carbonate, cesium carbonate, potassium carbonate, and sodium carbonate; and alkali metal hydrogen carbonates such as lithium hydrogen carbonate, rubidium hydrogen carbonate, cesium hydrogen carbonate, potassium hydrogen carbonate, and sodium hydrogen carbonate. These may be used alone or in combination of two or more.

By using these alkali metal compounds having a specific surface area of 0.3 $m^2/g$ or more, the desalting polycondensation reaction can be performed with high efficiency. The specific surface area of the alkali metal compound catalyst is preferably 0.8 $m^2/g$ or more, more preferably 1.2 $m^2/g$ or more. By using an alkali metal compound having a larger specific surface area, the chance of contact between the catalyst and the reaction raw materials is further increased, and the desalting polycondensation reaction can be performed with higher efficiency. When the specific surface area is smaller than 0.3 $m^2/g$, the desalting polycondensation reaction cannot be performed with sufficiently high efficiency

unless the amount of catalyst is increased, but an increase in the amount of catalyst is not preferred because the polycondensate quality is affected.

From the above, the basic compound in the above desalting polycondensation reaction is preferably an alkali metal carbonate such as lithium carbonate, rubidium carbonate, cesium carbonate, potassium carbonate, or sodium carbonate, more preferably lithium carbonate, potassium carbonate, or sodium carbonate, particularly preferably potassium carbonate or sodium carbonate having a specific surface area of 0.3 $m^2/g$ or more from the viewpoint of availability.

In the above desalting polycondensation reaction, the amount of basic compound used, for example, in the case of an alkali metal compound, is usually preferably at least 2 times that of the dihydroxy compound (I) on a molar basis in terms of alkali metal ions contained, but side reactions, such as cleavage of an ether bond formed, will occur if a large excess of the alkali metal compound is used. Thus, the amount used is preferably in the range of 2 to 4 times, more preferably in the range of 2 to 2.4 times, particularly preferably in the range of 2 to 2.2 times, on a molar basis.

Examples of the method of producing a polyether nitrile according to the present invention include, but are not limited to, a method in which the aromatic dihydroxy compound (I) and the basic compound are allowed to react in a solvent to obtain a basic compound salt of the aromatic dihydroxy compound (I), which is then allowed to undergo a desalting polycondensation reaction with the dihalobenzonitrile compound (II), and a method in which a desalting polycondensation reaction of a basic compound salt of the aromatic dihydroxy compound (I) with the dihalobenzonitrile compound (II) is allowed to proceed in a state where the aromatic dihydroxy compound (I), the dihalobenzonitrile compound (II), and the basic compound coexist.

As an example of the method for producing a polyether nitrile according to the present invention, when the compound represented by general formula (2) as the aromatic dihydroxy compound (I) and the compound represented by general formula (3) as the dihalobenzonitrile compound (II) are allowed to undergo a polycondensation reaction using potassium carbonate as the basic compound, a polyether nitrile having a repeating unit represented by general formula (1) is obtained. The reaction formula in this case is shown below.

[Chem. 5]

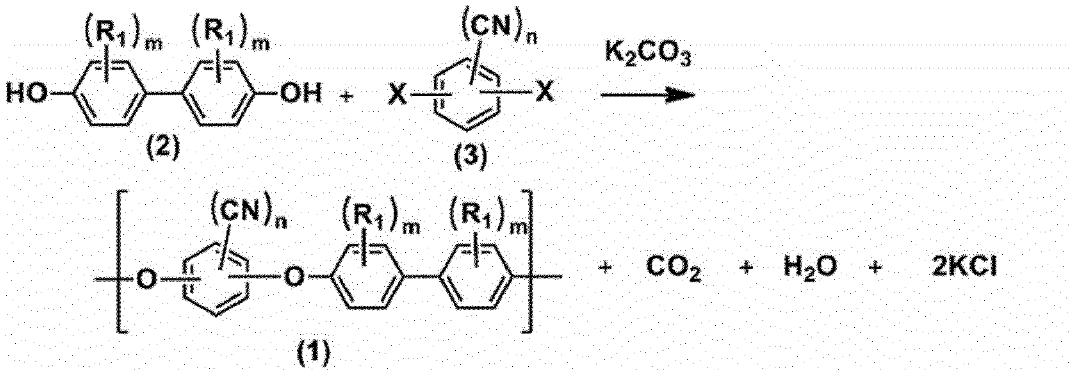


(In the formula, $R_1$, X, m, and n are as defined in general formulae (1) to (3) .)

In producing the polyether nitrile, the polycondensation reaction may be performed through divided steps of an oligomer formation step (A) and a polymerization step (B), in which the reaction is performed in different ways, or through a single undivided step.

The oligomer formation step (A) is a step of allowing the aromatic dihydroxy compound (I) and the dihalobenzonitrile compound (II) to undergo a polycondensation reaction in the presence of a basic compound to form an oligomer. The oligomer in this case is not particularly limited, and a polycondensation reaction product having a polymer reduced viscosity of about less than 1 is referred to as an oligomer.

The polymer formation step (B) is a step of further subjecting the oligomer obtained in the step (A) to the polycondensation reaction to form a polymer. As the oligomer at this time, the polycondensation reaction solution in the step (A) can be used as it is, or an oligomer isolated by additionally performing the step (A) can also be used.

The above polycondensation reaction involves an operation to remove water generated during a desalting reaction out of the system. The method of the operation is, for example, a method in which the reaction is run at a temperature at which the desalting reaction proceeds in the presence of a solvent that forms an azeotrope with water, and during the reaction, water is distilled off the reaction mixture by means of the solvent that forms an azeotrope with water. This allows the reaction to be maintained in a substantially anhydrous state. The temperature at which the desalting reaction starts is typically around 130°C, while depending on the raw materials. For example, in the case of using 4,4'-biphenol as the aromatic dihydroxy compound (I), 2,6-dichlorobenzonitrile as the dihalobenzonitrile compound (II), potassium carbonate, sulfolane (boiling point, 285°C) as an aprotic solvent, and toluene as the solvent that forms an

azeotrope with water, the reaction temperature is preferably in the range of 130°C to 170°C.When the reaction is continued, it is preferable to maintain the reaction system in a substantially anhydrous state while removing water produced as a result of the reaction. When the water produced is not sufficiently removed, the water may react with the dihalobenzonitrile compound (II) to form a byproduct having a phenol skeleton, resulting in the production of a low-molecular-weight product alone. That is, to obtain a high-molecular-weight polyether nitrile, the reaction system preferably contains substantially no water, preferably less than 0.5 wt% of water.

The above polycondensation reaction is performed in an inert atmosphere, such as a nitrogen atmosphere, under atmospheric pressure, but may also be performed under increased pressure or reduced pressure.

<Solvent>

In the above polycondensation reaction, a reaction solvent can be used, and it is preferable to use an aprotic solvent as the reaction solvent.

Specific examples of the aprotic solvent include N,N-dimethylacetamide, N,N-dimethylformamide, N-methyl-2-pyrolidone, 1,3-dimethyl-2-imidazolidinone, γ-butyrolactone, sulfolane, dimethyl sulfoxide, diethyl sulfoxide, dimethyl sulfone, diethyl sulfone, diisopropyl sulfone, diphenyl sulfone, diphenyl ether, benzophenone, dialkoxybenzenes (the number of carbon atoms in the alkoxy group, 1 to 4), and trialkoxybenzenes (the number of carbon atoms in the alkoxy group, 1 to 4). Among these solvents, high-permittivity polar organic solvents such as N-methyl-2-pyrolidone, N,N-dimethylacetamide, sulfolane, diphenyl sulfone, and dimethyl sulfoxide are particularly suitable for use. These may be used alone or in combination of two or more.

Furthermore, a nitrogen-containing solvent may be used, and specific examples include N-alkylpyrrolidinones such as dimethylacetamide, dimethylformamide, and N-methylpyrrolidinone. Other solvents such as benzophenone and tetra-substituted urea may also be used.

The amount of dipolar aprotic solvent used is not particularly limited as long as the raw materials are homogeneously dissolved and the alkali metal salt is stirred and dispersed well. Any amount that maximizes the volume efficiency of a reaction vessel may be chosen according to the raw materials used and the target polymer. Typically, the amount is chosen in the range of 0.5 to 20 times the total weight of the raw materials and the alkali metal salt.

Specific examples of the solvent that forms an azeotrope with water include aromatic hydrocarbons such as benzene, toluene, xylene, hexane, cyclohexane, octane, chlorobenzene, dioxane, tetrahydrofuran, anisole, and phenetole. These may be used alone or in combination of two or more.

When the solvent that forms an azeotrope with water is used, it is preferable to use the solvent that forms an azeotrope with water in an amount in the range of 1 to 100 parts by weight relative to 100 parts by weight of the aprotic solvent, more preferably in the range of 1 to 10 parts by weight, still more preferably in the range of 2 to 5 parts by weight, from the viewpoint of volume efficiency and solvent recovery.

<Reaction temperature>

The reaction temperature in the polycondensation reaction is in the range of 140°C to 300°C. Within this range, the reaction may be continued at a constant temperature, or the temperature may be increased as the polycondensation reaction proceeds.

When the polycondensation reaction is performed through divided steps of the oligomer formation step (A) and the polymerization step (B), the reaction temperature in the oligomer formation step (A) is preferably in the range of 140°C to 200°C, more preferably in the range of 150°C to 170°C, still more preferably in the range of 155°C to 165°C, and the reaction temperature in the polymerization step (B) is preferably in the range of 200°C to 300°C, more preferably in the range of 210°C to 270°C, still more preferably in the range of 210°C to 240°C, particularly preferably in the range 215°C to 230°C.

For example, in the case of using 4,4'-biphenol as the aromatic dihydroxy compound (I), 2,6-dichlorobenzonitrile as the dihalobenzonitrile compound (II), potassium carbonate, sulfolane (boiling point, 285°C) as an aprotic solvent, and toluene as the solvent that forms an azeotrope with water, the reaction temperature is preferably in the range of 190°C to 280°C.

The reaction time of the polycondensation reaction varies depending on the reaction conditions and the raw materials used, but is typically 3 to 20 hours.

When the polycondensation reaction is performed through divided steps of the oligomer formation step (A) and the polymerization step (B), the reaction time of the step (A), while the reaction is preferably continued until carbon dioxide and water are not substantially produced, is not particularly limited. The reaction time is typically 1 to 6 hours, preferably 1 to 4 hours. The reaction time of the step (B) varies depending on the reaction conditions and the raw materials used, but is 1 to 8 hours, preferably 1 to 7 hours, more preferably 1 to 6 hours.

For the molecular weight of the target polyether nitrile, the progress of the reaction can be controlled using a

monofunctional phenol chain stopper such as p-phenylphenol, phenol, t-butylphenol, or others.

After the desired molecular weight of the target polyether nitrile has been achieved, the polymer is preferably treated with methyl halide, an activated aromatic halide such as benzyl halide, or an aliphatic halide to thereby convert the hydroxy end groups of the polyether nitrile into ether groups which stabilizes the polymer, whereby the polymer can be provided with good melt and oxidation stability.

<Treatment after reaction>

After completion of the polycondensation reaction, the polycondensation reaction product is taken out from the reaction vessel, solidified by cooling, then pulverized, and subjected to subsequent cleaning, drying, and molding material (pellet or chip) production steps; alternatively, the polycondensation reaction product taken out from the reaction vessel may be directly put into a cleaning tank in the cleaning step, or a solvent for use in the cleaning step described below may be poured into the reaction vessel after completion of the polycondensation reaction to transfer the product in slurry form or wax form to the cleaning step.

The cleaning step is a step of performing cleaning to remove a salt, a reaction solvent, and the like contained in the polycondensation reaction product obtained by the polycondensation reaction.

In this cleaning step, preferably, the reaction solvent in the polycondensation reaction product is subjected to extraction cleaning by a known method using a solvent such as an alcohol, a ketone, an aromatic hydrocarbon, an aliphatic hydrocarbon, or water, and then the salt resulting from the desalting reaction in the polycondensation reaction product is removed by cleaning with preferably water.

In a specific operation, the polycondensation reaction product in pulverized, slurry, or wax form is transferred to a container equipped with a stirrer, and an operation of stirring cleaning with a cleaning solvent and filtration is repeated until the contents of the reaction solvent and the salt fall below the desired levels.

As an apparatus, for example, a combination of a cleaning tank with a pressure filter or a centrifuge, or a multifunctional filtration system capable of performing cleaning, filtration, and drying by itself may be used.

Specific examples, excluding water, of solvents for extraction cleaning of the reaction solvent include alcohols such as methanol, ethanol, propyl alcohol, isopropyl alcohol, butyl alcohol, isobutyl alcohol, sec-butyl alcohol, t-butyl alcohol, n-amyl alcohol, isoamyl alcohol, t-amyl alcohol, n-hexyl alcohol, cyclohexanol, n-octyl alcohol, and capryl alcohol; ketones such as acetone, methyl ethyl ketone, methyl n-propyl ketone, diethyl ketone, 2-hexanone, 3-hexanone, methyl-t-butyl ketone, di-n-propyl ketone, diisopropyl ketone, diisobutyl ketone, di-n-amyl ketone, diacetyl, acetylacetone, cyclohexanone, and benzophenone; aliphatic hydrocarbons including saturated aliphatic hydrocarbons such as n-hexane, 2-methylhebtane, 3-methylhebtane, 2,2-dimethylbutane, 2,3-dimethylbutane, n-hebtane, 2-methylhexane, 3-methylhexane, 2,2-dimethylpentane, 2,3-dimethylpentane, 2.4-dimethylpentane, 3,3-dimethylpentane, 3-ethylpentane, 2,2.3-trimethylbutane, and cyclohexane and unsaturated hydrocarbons such as 1-hexene, 1-heptene, 1-octene, and cyclohexene; and aromatic hydrocarbons such as benzene, toluene, o-xylene, m-xylene, p-xylene, ethylbenzene, n-propylbenzene, cumene, n-butylbenzene, t-butylbenzene, styrene, and allylbenzene.

Of these, for example, methanol, ethanol, acetone, methyl ethyl ketone, xylene, and toluene are preferred, and acetone and methanol are particularly preferred in terms of operability and ease of distillation recovery of the reaction solvent after cleaning.

For the cleaning of the alkali metal salt such as potassium chloride resulting from the desalting polycondensation reaction, water is preferably used, or acidic water containing oxalic acid or acetic acid at a low concentration may be used.

For the conditions of this cleaning step, the amount of cleaning solvent used, the number of times of cleaning, and the cleaning temperature may be appropriately selected according to the amounts of residual reaction solvent and residual alkali metal salt desired to be removed.

The drying step is a step of drying the polycondensation reaction product obtained by the above cleaning step.

The water-containing polycondensation reaction product that has been through the cleaning is dried by a known method. As a dryer, a known apparatus such as an evaporator, a shelf-type oven, or a tumbler can be used.

The target water content is typically 0.5 wt% or less, preferably 0.4 wt% or less, still more preferably 0.3 wt% or less.

This drying step may be performed under any conditions as long as the temperature is equal to or lower than the melting point of the polycondensation reaction product and water can be removed. To avoid contact with air as much as possible, the drying step is preferably performed under reduced pressure in an inert gas (e.g., nitrogen or argon) atmosphere or under a stream of inert gas.

The polymer that has been through the drying step is basically a powder.

The molecular weight (number-average molecular weight (Mn), weight-average molecular weight (Mw)) of the polyether nitrile produced by the above-described method depends on the intended use and is not particularly limited, and the molecular weight as determined by gel permeation chromatography (GPC) is in the range of 40,000 to 1,000,000, preferably in the range of 50,000 to 500,000, still more preferably in the range of 60,000 to 300,000. If the molecular

weight of the polymer obtained is less than 40,000, the polymer has poor mechanical strength, and if it is 1,000,000 or more, the polymer is difficult to mold, which are not preferred.

The reduced viscosity $\eta_{red}$ of the polyether nitrile produced by the above-described method is 1 or more and 5 or less, preferably 1.2 or more and 4.5 or less, more preferably 1.5 or more and 4.0 or less, particularly preferably 1.5 or more and 3.5 or less.

The reduced viscosity $\eta_{red}$ in the present invention is a value determined by a method described as a measurement method in EXAMPLES given later.

The glass transition temperature (Tg) of the polyether nitrile produced by the above-described method, while depending on the types of the aromatic dihydroxy compound (I) and the dihalobenzonitrile compound (II) used for polymerization of the polyether nitrile, is preferably 180°C or higher and 300°C or lower, more preferably 200°C or higher and 280°C or lower, still more preferably 200°C or higher and 250°C or lower.

The melting point of the polyether nitrile produced by the above-described method, while depending on the types of the aromatic dihydroxy compound (I) and the dihalobenzonitrile compound (II) used for polymerization of the polyether nitrile, is preferably 300°C or higher and 450°C or lower, more preferably 330°C or higher and 400°C or lower, still more preferably 330°C or higher and 380°C or lower.

The production method according to the present invention is characterized in that a polyether nitrile obtained as described above is melt-molded under exclusion of oxygen or in an inert atmosphere in producing a molding material shaped as pellets, chips, or the like.

The production method according to another aspect of the present invention is characterized in that a polyether nitrile resin composition containing a polyether nitrile obtained as described above and at least one selected from the group consisting of (A) to (C): a thermoplastic resin material (A), an additive (B), and a filler (C), is melt-molded under exclusion of oxygen or in an inert atmosphere in producing a molding material shaped as pellets, chips, or the like.

In the present invention, the polyether nitrile molding material means a substance formed of the polyether nitrile described above and formed into a shape such as pellets or chips.

The polyether nitrile resin composition according to the present invention contains the polyether nitrile described above and at least one selected from the group consisting of a thermoplastic resin material (A), an additive (B), and a filler (C).

In the present invention, the polyether nitrile resin composition molding material means a substance formed of the polyether nitrile resin composition and formed into a shape such as pellets or chips.

Specific examples of the thermoplastic resin material (A) contained in the polyether nitrile resin composition include high-density polyethylene, medium-density polyethylene, isotactic polypropylene, acrylonitrile-butadiene-styrene (ABS) resin, acrylonitrile-styrene (AS) resin, acrylic resin, fluorocarbon resin (e.g., polytetrafluoroethylene), polyester, polycarbonate, polyarylate, aliphatic polyamide, aromatic polyamide, polysulfone, polyether sulfone, polyether ketone, polyether nitrile, polyphenylene sulfide, polyetherimide, polyamideimide, polyesterimide, and modified polyphenylene oxide.

Specific examples of the additive (B) contained in the polyether nitrile resin composition include hydrophilic agents, antioxidants, secondary antioxidants, flame retardants, flame retardant aids, plasticizers, lubricants, release agents, antifogging agents, weathering stabilizers, light stabilizers, hydrolysis resistance improvers, flowability improvers, UV absorbers, antistatic agents, metal deactivators, near-infrared absorbers, and colorants (dyes and pigments).

Specific examples of the filler (C) contained in the polyether nitrile resin composition include various metal powders, powders of inorganic acid metal salts (e.g., calcium carbonate, zinc borate, calcium borate, zinc stannate, calcium sulfate, and barium sulfate), powders of metal oxides (e.g., magnesium oxide, iron oxide, titanium oxide, zinc oxide, and alumina), powders of metal hydroxides (e.g., aluminum hydroxide, magnesium hydroxide, zirconium hydroxide, and alumina hydrate (boehmite)), powders of metal sulfides (e.g., zinc sulfide, molybdenum sulfide, and tungsten sulfide), silver nanowires, carbon fibers, glass fibers, carbon nanotubes, graphene, and ceramic materials such as silica.

These (A) to (C) can be mixed in an appropriate amount depending on the intended use.

The amount of (A) to (C) in the polyether nitrile resin composition in the present invention is preferably 90 wt% or less relative to the total weight of the polyether nitrile resin composition.

In the present invention, "under exclusion of oxygen" means a condition where oxygen does not flow into a molding apparatus, and it is not intended to remove oxygen slightly contained in the apparatus and in the polyether nitrile used. For example, by setting the molding condition to a pressurized condition, the condition where oxygen does not flow into a molding apparatus, that is, "under exclusion of oxygen" in the present invention, can be achieved.

The molding apparatus may be brought to be in an inert atmosphere by using an inert gas such as nitrogen gas or argon gas.

As a molding apparatus used to produce a molding material such as pellets or chips, a melt-kneading apparatus such as a single-screw, twin-screw, or multi-screw extruder, a Banbury mixer, a kneader, or a roller is typically used, but a molding material such as pellets or chips may be produced by cutting a sheet prepared using a compression molding machine as used in Examples described later.

An industrially preferred process in producing a polyether nitrile molding material and a polyether nitrile resin composition molding material is as follows. The polyether nitrile powder obtained through polycondensation, pulverization, cleaning, and vacuum drying is directly transferred to, for example, a silo sealed with nitrogen gas or the like and stored there without being exposed to the outside air. When formed into a shape such as pellets or chips, the powder is transferred to an extruder together with nitrogen gas through a pipe without any treatment.

In producing the polyether nitrile resin composition molding material, methods such as 1) preliminarily mixing the polyether nitrile powder or preformed polyether nitrile molding material and other components ((A) to (C) above) and then transferring the mixture to an extruder, 2) preliminarily preparing molding materials of a plurality of polyether nitrile resin compositions having different compositions using the polyether nitrile powder or preformed polyether nitrile molding material and other components ((A) to (C) above), mixing the molding materials in predetermined amounts so as to give a desired content ratio, and then transferring the mixture to an extruder, 3) directly feeding the polyether nitrile powder or preformed polyether nitrile molding material and other components ((A) to (C) above) into an extruder can be employed, and these methods are preferably performed in an inert atmosphere. The polyether nitrile molding material used here may be the polyether nitrile molding material according to the present invention, which is preferably used. The polyether nitrile resin composition molding material used here may be a polyether nitrile resin composition molding material obtained by the production method according to the present invention, which is preferably used. Melt-kneading is then performed in no contact with oxygen (air), and a molten polymer from a die is pelletized by cutting in water or water-cooled cutting of a strand.

For the conditions of the process of producing these molding materials (pellets or chips), the melt molding condition must be under exclusion of oxygen or in an inert atmosphere, and the operation described above is performed at a temperature sufficient to melt the polymer. The upper limit of the temperature in the melt molding is 500°C or lower. The polyether nitrile powder used in Examples, which is obtained using biphenol and 2,6-dichlorobenzonitrile, has a melting point of 364°C and thus is preferably processed at a temperature higher than the melting point, 380°C or higher. The upper limit of the temperature is preferably 480°C or lower, more preferably 450°C or lower, still more preferably 430°C or lower, particularly preferably 400°C or lower.

The polyether nitrile molding material according to the present invention that has been through the above molding material (pellet or chip) production step has a melt flow rate (MFR) in the range of 2 to 50 g/10 min as measured at 390°C under a load of 5000 g in accordance with ISO 1133. The polyether nitrile molding material exhibits high and less variable flowability when melted by heating, and thus can provide a stable heat-molded article excellent in high heat resistance, surface smoothness, dimensional stability, etc. and having improved usage quality.

The melt flow rate (MFR) of the polyether nitrile molding material according to the present invention is preferably in the range of 3 to 50 g/10 min, more preferably in the range of 4 to 50 g/10 min, still more preferably in the range of 5 to 50 g/10 min.

Examples and preferred examples of the molecular weight, reduced viscosity $\eta_{red}$, glass transition temperature (Tg), and melting point of the polyether nitrile molding material according to the present invention are the same as those of the polyether nitrile described above.

Specifically, the molecular weight (number-average molecular weight (Mn), weight-average molecular weight (Mw)) depends on the intended use and is not particularly limited, and the molecular weight as determined by GPC is in the range of 40,000 to 1,000,000, preferably in the range of 50,000 to 500,000, still more preferably in the range of 60,000 to 300,000. If the molecular weight is less than 40,000, the molding material may have poor mechanical strength, and if it is 1,000,000 or more, the molding material may be difficult to mold.

The reduced viscosity $\eta_{red}$ is 1 or more and 5 or less, preferably 1.2 or more and 4.5 or less, more preferably 1.5 or more and 4.0 or less, particularly preferably 1.5 or more and 3.5 or less. The reduced viscosity $\eta_{red}$ in the present invention is a value determined by a method described as a measurement method in EXAMPLES given later.

The glass transition temperature (Tg), while depending on the types of the aromatic dihydroxy compound (I) and the dihalobenzonitrile compound (II) used for polymerization of the polyether nitrile, is preferably 180°C or higher and 300°C or lower, more preferably 200°C or higher and 280°C or lower, still more preferably 200°C or higher and 250°C or lower.

The melting point, while depending on the types of the aromatic dihydroxy compound (I) and the dihalobenzonitrile compound (II) used for polymerization of the polyether nitrile, is preferably 300°C or higher and 450°C or lower, more preferably 330°C or higher and 400°C or lower, still more preferably 330°C or higher and 380°C or lower.

The present inventors have ascertained that when a polyether nitrile is subjected to melt kneading or heat compression molding to be formed into a molding material such as pellets or chips, melt flowability greatly decreases.

The present inventors have considered that this great decrease in melt flowability is due to the fact that the polyether nitrile has a very high melting point and needs to be molded at a high temperature close to 400°C, which is thermally intolerable for commonly used engineering plastics. In addition, as described above, the polyether nitrile produced by desalting polycondensation, due to its production process, can be obtained as a pure polymer only in the form of a fine powder having a large specific surface area or powder, and thus it is presumed that when the polyether

nitrile is melt-molded into pellets or chips, the influence of oxidation by oxygen, in addition to the high temperature close to 400°C, is very significant.

In an infrared spectroscopy (IR) spectrum of the polyether nitrile of the related art with greatly decreased melt flowability, it has been observed that the ratio of the intensities at approximately 1700 and 1520 $cm^{-1}$ to the intensity of a peak (approximately 2220 $cm^{-1}$) attributed to a cyano group tends to increase after molding (after heating) compared to before molding (before heating). The peaks at approximately 1700 and 1520 $cm^{-1}$ in this infrared spectroscopy (IR) spectrum are presumed to be peaks attributed to a cross-linked structure of the polyether nitrile.

That is, the molding material of the polyether nitrile of the related art is considered to experience a great decrease in melt flowability because a cross-linked structure is formed under the influence of oxidation by oxygen during molding at a high temperature close to 400°C.

Thus, to avoid the influence of oxidation during melt molding into a molding material such as pellets or chips, the present inventors have studied production under conditions where the influence of oxygen is eliminated under exclusion of air intrusion or in an inert gas atmosphere such as nitrogen, and found that a polyether nitrile molding material that exhibits high flowability can be obtained.

That is, the present invention has revealed that by melt-molding a polyether nitrile under exclusion of oxygen or in an inert atmosphere, the formation of a cross-linked structure is significantly suppressed, whereby a polyether nitrile molding material that exhibits high flowability can be obtained.

The present invention has also revealed that by melt-molding the polyether nitrile resin composition in the present invention under exclusion of oxygen or in an inert atmosphere, a polyether nitrile resin composition molding material that exhibits good flowability can be obtained.

Molded articles and parts obtained using the polyether nitrile molding material according to the present invention and the polyether nitrile resin composition molding material obtained by the method of the present invention have heat resistance, chemical resistance, flame resistance, and high mechanical properties. The molded articles and parts can be used in, for example, electric and electronic applications such as personal computers and semiconductor parts, automotive applications such as gears, bearings, and housings around engines, or applications in the medical equipment and aerospace fields.

## EXAMPLES

The present invention will now be described more specifically with reference to Examples, but it should be noted that the present invention is not limited to these Examples.

Analysis methods in the present invention are as follows.

### <Analysis methods>

(1) Method of measuring reduced viscosity $\eta_{red}$ (dL/g)

A sample in an amount of 0.1 g was dissolved in about 5 g of parachlorophenol at 180°C, and the solution was transferred to a 10 mL measuring flask. The flask was made up to volume at 40°C. This was weighed out with a 5 mL whole pipette and put into an Ostwald tube (capillary tube, 0.75 mm). The Ostwald tube was allowed to stand in a constant-temperature bath at 40.0°C for 15 minutes, and a flow time T was measured to calculate the reduced viscosity $\eta_{red}$ (dL/g) of a polymer by the following formula.

[Calculation formula]

$$\eta_{red} = \{(T/T0) - 1\}/C$$

C: solution concentration (g/dL), T: flow time of solution, T0: flow time of solvent

(2) Thermal properties: melting point and glass transition temperature (Tg)

Using a differential scanning calorimeter (DSC-60, manufactured by Shimadzu Corporation), thermal properties of a sample were measured under the following conditions.

Conditions: sample, about 10 mg; nitrogen flow rate, 50 mL/min; temperature change range, 50°C to 450°C; temperature change rate, 10°C/min.

(3) Melt flow rate (MFR) measurement

In accordance with ISO 1133, a sample dried under vacuum at 120°C for 16 hours was measured using a Melt Flow indexer D4003 (manufactured by Dynisco JAPAN) at a temperature of 390°C under a load of 5000 g for a preheating time of 5 minutes.

(4) Measurement of molecular weight

The weight-average molecular weight (Mw) and the number-average molecular weight (Mn) of a polyether nitrile obtained were measured with the following apparatus under the following conditions using a solution obtained by 10-fold diluting a 1% p-chlorophenol solution of the polyether nitrile with chloroform.

Apparatus: gel permeation chromatography (GPC): 515 HPLC pump, 717plus Autosampler, 2487 UV/Vis Detector (manufactured by Nihon Waters K.K.)
Column: 2 × PLgel 5pMIXED-D, 7.5 × 300 mm (Agilent Technologies)
Column temperature: 40°C
Flow rate: 1.0 mL/min
Injection volume: 2.5 μL
Detection: UV/Vis Detector: 254 nm
Column calibration: monodisperse polystyrene (EasiCal PS-1, Agilent Technologies)
Molecular weight calibration: relative calibration method (relative to polystyrene)
Analysis software: Empower3 (manufactured by Nihon Waters K.K.)

<Synthesis example of polyether nitrile powder>

In a four-necked 3-liter reaction vessel equipped with a mechanical stirrer, a thermometer, a dry nitrogen inlet, and a reflux condenser, 298.45 g (1.735 mol) of 2,6-dichlorobenzonitrile (hereinafter referred to as "DCBN"), 323.08 g (1.735 mol) of 4,4'-biphenol (hereinafter referred to as "BP"), 251.79 g (1.822 mol) of anhydrous potassium carbonate, 60 g of toluene, and 1562 g of anhydrous sulfolane were loaded. This mixture was heated from room temperature under a stream of nitrogen, and with stirring at 250 rpm, the temperature was increased to 160°C with heating under reflux. At 130°C or higher, carbon dioxide evolved from the reaction of potassium carbonate and biphenol. After 3 hours at 160°C, the oligomerization reaction of "DCBN" and "BP" was completed, and the cooling water in the reflux condenser was then replaced with warm water to remove water and toluene through an outlet, whereby the temperature was raised to 220°C, where a polycondensation reaction was performed for 3 hours.

After the polycondensation reaction, a polycondensation reaction product was taken out from the bottom of the reaction vessel and allowed to cool and solidify. After this solid product was pulverized with a Waring blender, this substance was washed with acetone and distilled water and dried in a vacuum oven at 120°C for 16 hours to obtain 470 g of a polyether nitrile powder (yield, 95%).

This polymer powder had a reduced viscosity $\eta_{red}$ of 2.19.

The polymer powder had a weight-average molecular weight (Mw) of 77300 and a number-average molecular weight (Mn) of 30100 as measured by GPC.

The polymer powder had a melting point of 364°C and a glass transition temperature (Tg) of 215°C.

<Example 1>

On a stainless-steel plate of 150 mm × 150 mm × 5 mm, a polyimide film was mounted, and a 20-mm-wide spacer having a space 1 mm thick, 90 mm long, and 40 mm wide was further placed. The spacer was filled with 5 g of the polyether nitrile powder obtained in "Synthesis example of polyether nitrile powder" above. Furthermore, a polyimide film was put thereon, and another stainless-steel plate of 150 mm × 150 mm × 5 mm was placed thereon (hereinafter, the resulting assembly is referred to as a "molding die"). The "molding die" was quickly loaded on a lower platen of a press molding machine (MINI TEST PRESS MP-2FH manufactured by Toyo Seiki Co., Ltd.) preliminarily heated to 400°C such that the powder did not spill out. After the "molding die" was loaded, an upper platen was immediately moved down to apply pressure, which reached 10 MPa within 30 seconds, and the "molding die" was held at 400°C for 15 minutes.

After 15 minutes, the "molding die" was removed from the platens and rapidly cooled with an attached water-cooling cold press machine. After the cooling, a polyether nitrile sheet 1 mm thick, 90 mm long, and 40 mm wide was obtained from the removed "molding die".

This sheet was cut to prepare sample pieces about 5 mm square, which were used as polyether nitrile pellets.

These pellets had a MFR of 9.0 (g/10 min).

<Example 2>

Polyether nitrile pellets were obtained by the same operation as in Example 1 with the temperature during press molding changed to 380°C. These pellets had a MFR of 18.4 (g/10 min).

<Comparative Example 1>

Polyether nitrile pellets were obtained by the same operation as in Example 1 above except that the "molding die", after being loaded, was held at 400°C without pressure for 10 minutes, and after 10 minutes, the "molding die" was pressurized to 10 MPa and held for 5 minutes.

These pellets had a MFR of 0 (g/10 min), showing that they did not melt and flow at all at 390°C.

<Comparative Example 2>

Polyether nitrile pellets were obtained by the same operation as in Comparative Example 1 with the temperature during press molding changed to 380°C. These pellets had a MFR of 0 (g/10 min), showing that they did not melt and flow at all at 390°C.

In Comparative Examples 1 and 2, the "molding die", after being loaded, was held at 400°C without pressure for 10 minutes, meaning that the molding was performed with air (oxygen contained in the air) flowing in.

By contrast, in Examples 1 and 2, the pressing was performed in such a manner that after the "molding die" was loaded, an upper platen was immediately moved down to apply pressure, which reached 10 MPa within 30 seconds, meaning that the molding was performed without air (oxygen contained in the air) flowing in the pressing machine, that is, under exclusion of oxygen.

<Example 3>

In a batch-type kneader (Plasticorder mixer manufactured by Brabender GmbH & Co. KG), 200 g of the polyether nitrile powder obtained in "Synthesis example of polyether nitrile powder" above was put, and melt-kneaded at 390°C for 10 minutes in a nitrogen atmosphere. The resin was taken out and then cooled to room temperature. The solidified resin was cut to prepare sample pieces about 5 mm each, which were used as polyether nitrile pellets.

These pellets had a MFR of 8.8 (g/10 min).

<Comparative Example 3>

Polyether nitrile pellets were obtained by the same operation as in Example 3 using an air atmosphere in the melt kneading. These pellets had a MFR of 0 (g/10 min).

For Comparative Examples, it has become clear from the MFR measurement results of the pellets obtained that when molding is performed with oxygen circulating in a molding machine, only pellets with completely lost melt flowability can be obtained. By contrast, it has become clear that when molding is performed under exclusion of oxygen in a molding machine, pellets with significantly high melt flowability can be obtained.

It has become clear that the method of the present invention can provide a polyether nitrile molding material having high flowability during melt molding and is very useful for producing various molded articles of polyether nitrile.

## Claims

1. A polyether nitrile molding material having a melt flow rate (MFR) in a range of 2 to 50 g/10 min as measured at 390°C under a load of 5000 g in accordance with ISO 1133.

2. The polyether nitrile molding material according to Claim 1, comprising a polyether nitrile having a repeating unit represented by general formula (1) below.

[Chem. 1]

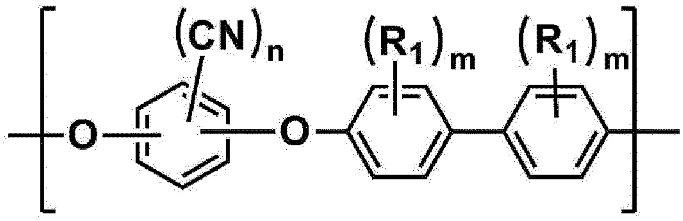

(1)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, and n represents an integer of 1 to 4.)

**3.** The polyether nitrile molding material according to Claim 1, having a reduced viscosity $\eta_{red}$ of 1 or more and 5 or less.

**4.** The polyether nitrile molding material according to Claim 1, having a glass transition temperature (Tg) of 180°C or higher and 300°C or lower.

**5.** A method for producing the polyether nitrile molding material according to Claim 1, comprising melt-molding a polyether nitrile under exclusion of oxygen or in an inert atmosphere.

**6.** The method for producing the polyether nitrile molding material according to Claim 5, wherein the polyether nitrile has a reduced viscosity $\eta_{red}$ of 1 or more and 5 or less.

**7.** The method for producing the polyether nitrile molding material according to Claim 5, wherein the polyether nitrile has a glass transition temperature (Tg) of 180°C or higher and 300°C or lower.

**8.** A method for producing a polyether nitrile resin composition molding material, comprising melt-molding, under exclusion of oxygen or in an inert atmosphere, a polyether nitrile resin composition containing a polyether nitrile and at least one type selected from the group consisting of (A) to (C): a thermoplastic resin material (A), an additive (B), and a filler (C).

**INTERNATIONAL SEARCH REPORT**

International application No.
**PCT/JP2022/039928**

**A. CLASSIFICATION OF SUBJECT MATTER**

***C08L 71/10***(2006.01)i; ***C08G 65/40***(2006.01)i; ***C08K 3/013***(2018.01)i
FI: C08L71/10; C08K3/013; C08G65/40

According to International Patent Classification (IPC) or to both national classification and IPC

**B. FIELDS SEARCHED**

Minimum documentation searched (classification system followed by classification symbols)

C08L71/10; C08G65/40; C08K3/013

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 05-271678 A (NSK LTD.) 19 October 1993 (1993-10-19)<br>claims, paragraphs [0008], [0011], [0021], [0028], [0031]-[0033], [0035]-[0037], examples | 1-8<br>1-7 |
| Y | JP 10-158456 A (NTN CORP.) 16 June 1998 (1998-06-16)<br>paragraph [0040] | 1-7 |
| X<br>Y | JP 09-020861 A (NTN CORP.) 21 January 1997 (1997-01-21)<br>claims, paragraphs [0022], [0024], [0083], [0087], [0090], [0094]-[0096], examples | 1-8<br>1-7 |
| A | JP 60-147439 A (IDEMITSU KOSAN KK) 03 August 1985 (1985-08-03)<br>claims, examples | 1-8 |
| A | JP 09-040864 A (MITSUI TOATSU CHEM., INC.) 10 February 1997 (1997-02-10)<br>claims, examples | 1-8 |
| A | JP 06-042302 A (NISSAN MOTOR CO., LTD.) 15 February 1994 (1994-02-15)<br>claims, examples | 1-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 December 2022** | **10 January 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2022/039928

C. DOCUMENTS CONSIDERED TO BE RELEVANT

| Category* | Citation of document, with indication, where appropriate, of the relevant passages | Relevant to claim No. |
|---|---|---|
| A | JP 07-180681 A (MITSUBISHI ELECTRIC CORP.) 18 July 1995 (1995-07-18) claims, examples | 1-8 |

Form PCT/ISA/210 (second sheet) (January 2015)

INTERNATIONAL SEARCH REPORT

International application No.
PCT/JP2022/039928

**Box No. III Observations where unity of invention is lacking (Continuation of item 3 of first sheet)**

This International Searching Authority found multiple inventions in this international application, as follows:

(Invention 1) Claim 1 and claims 2-7 referring thereto

Claim 1 and claims 2-7 referring thereto have the special technical feature of a "polyether nitrile molding material having a melt flow rate (MFR) in the range of 2-50 g/10 min as measured according to ISO 1133 at 390°C with a load of 5,000 g", and are thus classified as invention 1.

(Invention 2) Claim 8

Claim 8 and claim 1 classified as invention 1 share the technical feature of a "molding material comprising polyether nitrile". However, this feature does not make a contribution over the prior art in light of the content disclosed in document 4 (the claims, the examples, etc., in JP 60-147439 A), and thus cannot be said to be a special technical feature. Moreover, there are no other same or corresponding special technical features among these inventions.

Further, claim 8 is not dependent on claim 1. In addition, claim 8 is not substantially identical to or similarly closely related to any of the claims classified as invention 1.

Therefore, claim 8 cannot be classified as invention 1.

Claim 8 has the special technical feature of a "method for producing a polyether nitril resin composition molding material, characterized in that a polyether nitrile resin composition comprising polyether nitrile and at least one substance from the group consisting of (A) a thermoplastic resin material, (B) an additive and (C) a filler is melted and molded under oxygen insulation or in an inert atmosphere", and thus is classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

**INTERNATIONAL SEARCH REPORT**
**Information on patent family members**

International application No.
**PCT/JP2022/039928**

| Patent document cited in search report | Publication date (day/month/year) | Patent family member(s) | Publication date (day/month/year) |
|---|---|---|---|
| JP 05-271678 A | 19 October 1993 | (Family: none) | |
| JP 10-158456 A | 16 June 1998 | (Family: none) | |
| JP 09-020861 A | 21 January 1997 | (Family: none) | |
| JP 60-147439 A | 03 August 1985 | (Family: none) | |
| JP 09-040864 A | 10 February 1997 | (Family: none) | |
| JP 06-042302 A | 15 February 1994 | (Family: none) | |
| JP 07-180681 A | 18 July 1995 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 60147439 A
- JP 61055120 A